# EUROPÄISCHE PATENTSCHRIFT

(11) **EP 3 060 821 B1**
(45) Veröffentlichungstag und Bekanntmachung des Hinweises auf die Patenterteilung: **15.11.2017**
(21) Anmeldenummer: 14789147.7
(22) Anmeldetag: 23.09.2014
(51) Int. Cl.: F16C 33/54, F16C 33/56, F16C 19/30

(54) **AXIALKÄFIG FÜR ZYLINDRISCHE WÄLZKÖRPER**
AXIAL CAGE FOR CYLINDRICAL ROLLING ELEMENTS
CAGE AXIALE POUR CORPS DE ROULEMENT CYLINDRIQUES

(30) Priorität: 22.10.2013 DE 102013221363
(43) Veröffentlichungstag der Anmeldung: 31.08.2016
(73) Patentinhaber: Schaeffler Technologies AG & Co. KG, 91074 Herzogenaurach (DE)
(72) Erfinder: FUGEL, Wolfgang, 90453 Nürnberg (DE); KIRSCHNER, Andreas, 91086 Aurachtal (DE)
(86) Internationale Anmeldenummer: PCT/DE2014/200497
(87) Internationale Veröffentlichungsnummer: WO 2015/058755

(56) Entgegenhaltungen:
- EP-A1- 1 780 428
- EP-A2- 1 519 062
- CH-A- 338 657
- DE-B- 1 174 113
- GB-A- 919 280
- US-A1- 2006 159 380

## Beschreibung

### Gebiet der Erfindung

Die Erfindung betrifft einen Axialkäfig für zylindrische Wälzkörper nach den oberbegriffsbildenden Merkmalen des Patentanspruchs 1, und sie insbesondere vorteilhaft an Axialkäfigen für Axialnadellager realisierbar.

### Hintergrund der Erfindung

Durch die DE 1 174 113 A ist ein gattungsbildender Axialkäfig für ein Axialnadellager bekannt, der im Wesentlichen aus einer dünnwandigen Ringscheibe mit einem profilierten Querschnitt besteht, der durch einen an den Innenrand der Ringscheibe angeformten inneren radialen Bord, einen an den Außenrand der Ringscheibe angeformten äußeren radialen Bord und eine über innere und äußere Zwischenprofilabschnitte mit den radialen Borden verbundene mittlere Sicke gebildet wird. Aus der mittleren Sicke und den angrenzenden Zwischenprofilabschnitten sind dabei eine Anzahl gleichmäßig zueinander beabstandeter, rechteckförmiger Käfigtaschen ausgenommen, zwischen denen eine gleiche Anzahl die Borde miteinander verbindende Taschenstege gebildet werden, durch welche die als Lagernadeln ausgebildeten zylindrischen Wälzkörper in den Käfigtaschen in gleichmäßigen Abständen zueinander gehalten sowie in Umlaufrichtung geführt werden.

Derartige Axialkäfige bestehen üblicherweise aus einem unlegierten Stahl wie z. B. der Sorte DC 03 und werden in bekannter Weise aus einem endlosen Blechband in mehreren Arbeitsschritten in einem Stufen-Stanzziehwerkzeug spanlos derart hergestellt, dass zunächst eine über zwei seitliche Haltestege mit dem Blechband verbundene Ringscheibe ausgestanzt wird, anschließend die mittlere Sicke und der äußere radiale Bord in die Ringscheibe eingeformt wird, danach der Innendurchmesser des Axialkäfigs ausgestanzt und der innere radiale Bord an die Ringscheibe angeformt werden, dann die Käfigtaschen ausgestanzt werden und schließlich noch der Außendurchmesser des Axialkäfigs ausgestanzt wird. Abschließend werden die fertig ausgeformten Axialkäfige noch in einem separaten Arbeitsschritt einsatzgehärtet und angelassen oder nitrocarburiert, um deren Verschleißfestigkeit zu erhöhen.

In der Praxis hat es sich jedoch gezeigt, dass vor allem das in einem separaten Arbeitsschritt durchzuführende Einsatzhärten und Anlassen oder das Nitrocarburieren der gestanzten Axialkäfige sehr zeit- und kostenaufwändig ist, durch das die Wirtschaftlichkeit der Käfigherstellung in Frage gestellt wird. Auch hinsichtlich der erzielbaren Qualität der Axialkäfige hat sich das Einsatzhärten und Anlassen oder das Nitrocarburieren der Axialkäfige als nachteilig erwiesen, da die Wärmebehandlung der Axialkäfige Härteverzüge und das Nitrocarburieren der Axialkäfige Toleranzschwankungen zur Folge hat, durch die es zu Unrundheiten bis hin zum Schleifen des Käfigs auf den Nadellaufbahnen oder zum Verklemmen der Lagernadeln in den Käfigtaschen kommt. Darüber hinaus können die bekannten Stahlkäfige lediglich mit einer Oberflächenhärtung und damit mit einer relativ geringen Verschleiß- und Zugfestigkeit ausgebildet werden, da ein Durchhärten der Stahlkäfige zu einer Versprödung des Materials und letztlich zu einem frühzeitigen Bruch des Axialkäfigs unter Betriebsbedingungen führen würde. Aus diesem Grund ist somit auch eine Herstellung von Axialkäfigen aus Stahlblechen mit sehr geringen Querschnitten überhaupt nicht möglich, da solche Materialien durch ihre geringe Stärke grundsätzlich durchhärten und damit verspröden würden.

### Aufgabe der Erfindung

Ausgehend von den dargelegten Nachteilen des bekannten Standes der Technik liegt der Erfindung deshalb die Aufgabe zu Grunde, einen Axialkäfig für zylindrische Wälzkörper zu konzipieren, welcher ohne Einsatzhärten und Anlassen oder Nitrocarburieren herstellbar ist und sich durch keinerlei Härteverzüge sowie durch eine gesteigerte Verschleiß- und Zugfestigkeit und geringere Toleranzschwankungen auszeichnet.

### Beschreibung der Erfindung

Erfindungsgemäß wird diese Aufgabe bei einem Axialkäfig nach dem Oberbegriff des Anspruchs 1 derart gelöst, dass dieser aus einer Ringscheibe hergestellt wird, die aus einem, bereits vor der Bearbeitung des profilierten Querschnitts, durchgehärteten und angelassenen, hochlegierten Federstahl mit einer maximalen Härte von 450 HV besteht.

Der Erfindung liegt somit die nicht ohne weiteres auf der Hand liegende Idee zugrunde, als Ausgangsmaterial für die Käfigherstellung einen hochlegierten Federstahl zu verwenden, der bereits vor der Bearbeitung durchgehärtet und angelassen ist. Da durch die Verwendung eines solchen Federstahls somit die standardmäßige Wärmebehandlung des Axialkäfigs entfallen kann, bleibt dessen hohe Stanzgenauigkeit erhalten und Härteverzüge sowie Toleranzschwankungen können nicht mehr auftreten. Darüber hinaus ist es durch die Verwendung von Federstahl für den Axialkäfig möglich, den Käfig aus extrem dünnen Bandmaterial herzustellen und dennoch formstabil auszubilden, da die Zugfestigkeit von Federstahl gegenüber dem bisher verwendeten Bandstahl bis zu einem Faktor 10 höher ist. Ebenso besteht durch die Verwendung von Federstahl für den Axialkäfig die Möglichkeit, die Axialkäfige bereits in der Stanzmaschine mit Wälzkörpern zu bestücken, da auch die üblicherweise vor dem Bestücken mit Wälzkörpern in einem separaten Arbeitsgang vorgenommene Oberflächenvergütung der Axialkäfige nunmehr entfallen kann.

Bevorzugte Ausgestaltungen und vorteilhafte Weiterbildungen des erfindungsgemäß ausgebildeten Axialkäfigs werden in den Unteransprüchen beschrieben.

Danach ist es gemäß Anspruch 2 bei dem erfindungsgemäß ausgebildeten Axialkäfig vorgesehen, dass als Federstahl für die Ringscheibe jeder handelsübliche Federstahl einsetzbar ist, beispielsweise ein Federstahl der Sorte C 75 SQT.

Nach Anspruch 3 ist es ein weiteres Merkmal des erfindungsgemäß ausgebildeten Axialkäfigs, dass der Federstahl für die Ringscheibe eine Materialstärke von 15% bis 25% des Durchmessers der Wälzkörper aufweist. Bei der bevorzugten Verwendung von Lagernadeln mit einem Durchmesser von 0,8 mm beträgt die Materialstärke des Federstahles für den Axialkäfig somit zwischen 0,12 mm und 0,2 mm.

Schließlich wird es als vorteilhafte Ausgestaltung des erfindungsgemäß ausgebildeten Axialkäfigs durch die Ansprüche 4 und 5 noch vorgeschlagen, dass das Querschnittsprofil der Ringscheibe als kantenfreies Wellenprofil ausgebildet ist, dessen mittlere Sicke die gleiche axiale Höhe wie die seitlichen Borde aufweist und dass die Zwischenprofilabschnitte und die mittlere Sicke die Form ab- und aufsteigend aneinander gereihter, gleicher Radien oder Sinuskurven aufweisen. Die mittlere Sicke mit der gleichen axialen Höhe wie die seitlichen Borde auszubilden erfolgt dabei zum Zwecke einer zuverlässigen Halterung der Wälzkörper in den Käfigtaschen. Die Ausbildung des Querschnittsprofils der Ringscheibe als kantenfreies Wellenprofil aus aneinander gereihten, gleichen Radien oder Sinuskurven erfolgt dagegen aus Gründen der Härte des verwendeten Federstahls, um einer durch Profilkanten verursachten möglichen Bruchgefahr des Axialkäfigs vorzubeugen.

### Kurze Beschreibung der Zeichnungen

Eine bevorzugte Ausführungsform des erfindungsgemäß ausgebildeten Axialkäfigs wird nachfolgend unter Bezugnahme auf die beigefügten Zeichnungen näher erläutert. Dabei zeigen:
- Figur 1: eine dreidimensionale Gesamtdarstellung eines erfindungsgemäß ausgebildeten Axialnadelkäfigs;
- Figur 2: den Schnitt A - A durch den erfindungsgemäß ausgebildeten Axialnadelkäfig nach Figur 1.

### Ausführliche Beschreibung der Zeichnungen

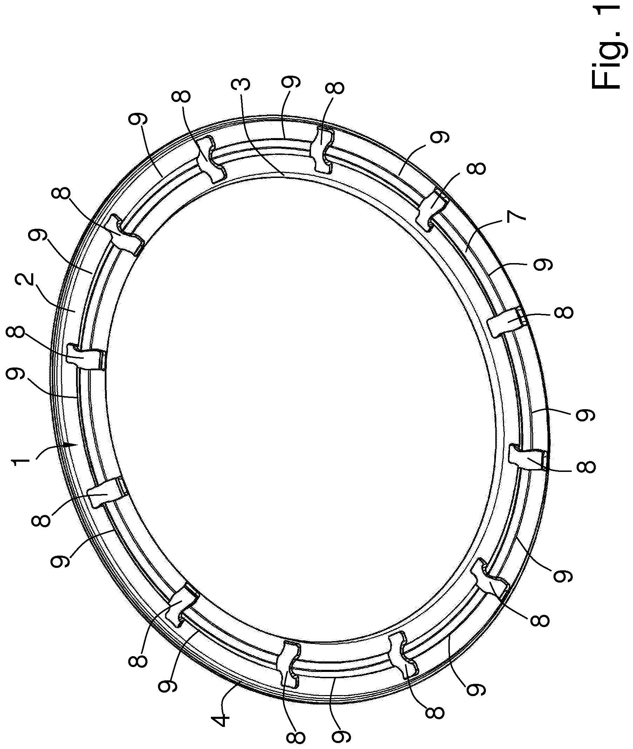

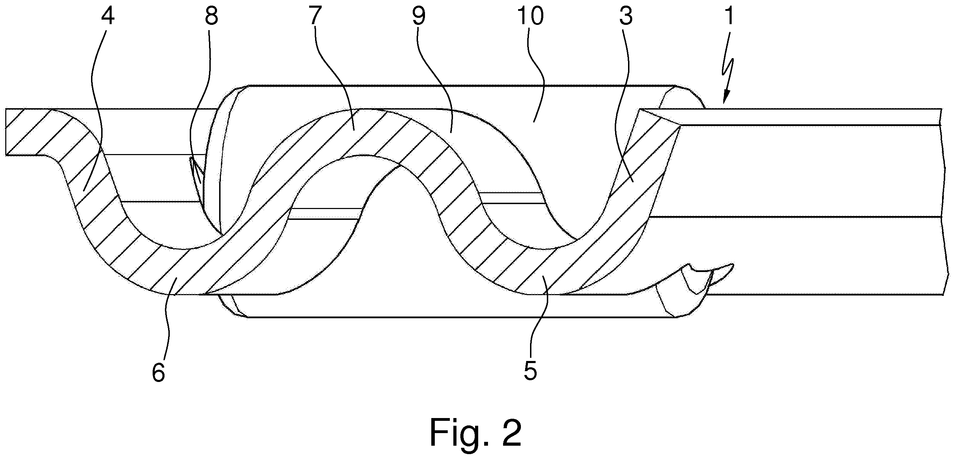

Aus Figur 1 geht deutlich ein Axialkäfig 1 für als Lagernadeln ausgebildete zylindrische Wälzkörper 10 hervor, der im Wesentlichen aus einer dünnwandigen Ringscheibe 2 mit einem profilierten Querschnitt besteht. Der profilierte Querschnitt wird dabei, wie aus Figur 2 ersichtlich ist, durch einen an den Innenrand der Ringscheibe 2 angeformten inneren radialen Bord 3, einen an den Außenrand der Ringscheibe 2 angeformten äußeren radialen Bord 4 und durch eine über radial innere und äußere Zwischenprofilabschnitte 5, 6 mit den radialen Borden 3, 4 verbundene mittlere Sicke 7 gebildet. Aus der Sicke 7 und den angrenzenden Zwischenprofilabschnitten 5, 6 sind darüber hinaus eine Anzahl gleichmäßig zueinander beabstandeter, rechteckförmiger Käfigtaschen 8 ausgenommen sind, zwischen denen eine gleiche Anzahl die Borde 3, 4 miteinander verbindender Taschenstege 9 gebildet werden, durch welche die zylindrischen Wälzkörper 10 in den Käfigtaschen 8 in gleichmäßigen Abständen zueinander gehalten sowie in Umlaufrichtung geführt werden.

Um bei dem gezeigten Axialkäfig 1 durch Einsatzhärten und Anlassen verursachte Härteverzüge oder durch Nitrocarburieren verursachte Toleranzschwankungen zu vermeiden, wird als Ausgangsmaterial für dessen Ringscheibe 2 erfindungsgemäß ein durchgehärteter und angelassener, hochlegierter Federstahl mit einer maximalen Härte von 450 HV verwendet. Als Federstahl für die Ringscheibe wird dabei beispielhaft ein Federstahl der Sorte C 75 SQT verwendet, der eine Materialstärke von 15% bis 25% des Durchmessers der Wälzkörper 10 aufweist. Das Querschnittsprofil der Ringscheibe 2 ist darüber hinaus, wie in Figur 2 deutlich zu sehen ist, zur Vermeidung von Käfigbrüchen und zur sicheren Halterung der Wälzkörper 10 in den Käfigtaschen 8 als kantenfreies Wellenprofil ausgebildet ist, dessen mittlere Sicke 7 die gleiche axiale Höhe wie die seitlichen Borde 3, 4 aufweist, wobei die Zwischenprofilabschnitte 5, 6 und die mittlere Sicke 7 die Form ab- und aufsteigend aneinander gereihter, gleicher Radien oder Sinuskurven aufweisen.

### Bezugszahlenliste

- 1: Axialkäfig
- 2: Ringscheibe
- 3: innerer radialer Bord
- 4: äußerer radialer Bord
- 5: innerer Zwischenprofilabschnitt
- 6: äußerer Zwischenprofilabschnitt
- 7: mittlere Sicke
- 8: Käfigtaschen
- 9: Taschenstege
- 10: Wälzkörper

## Patentansprüche

1. Axialkäfig (1) für zylindrische Wälzkörper, im Wesentlichen bestehend aus einer dünnwandigen Ringscheibe (2) mit einem profilierten Querschnitt, der durch einen an den Innenrand der Ringscheibe (2) angeformten inneren radialen Bord (3), einen an den Außenrand der Ringscheibe (2) angeformten äußeren radialen Bord (4) und durch eine über radial innere und äußere Zwischenprofilabschnitte (5, 6) mit den radialen Borden (3, 4) verbundene mittlere Sicke (7) gebildet wird, wobei aus der Sicke (7) und den angrenzenden Zwischenprofilabschnitten (5, 6) eine Anzahl gleichmäßig zueinander beabstandeter, rechteckförmiger Käfigtaschen (8) ausgenommen sind, zwischen denen eine gleiche Anzahl die Borde (3, 4) miteinander verbindender Taschenstege (9) gebildet werden, durch welche die zylindrischen Wälzkörper (10) in den Käfigtaschen (8) in gleichmäßigen Abständen zueinander gehalten sowie in Umlaufrichtung geführt werden, **dadurch gekennzeichnet, dass** die Ringscheibe (2) aus einem, bereits vor der Bearbeitung des profilierten Querschnitts, durchgehärteten und angelassenen, hochlegierten Federstahl mit einer maximalen Härte von 450 HV besteht.

2. Axialkäfig nach Anspruch 1, **dadurch gekennzeichnet, dass** als Federstahl für die Ringscheibe (2) ein beliebiger Federstahl einsetzbar ist, beispielsweise ein Federstahl der Sorte C 75 SQT.

3. Axialkäfig nach Anspruch 1, **dadurch gekennzeichnet, dass** der Federstahl für die Ringscheibe (2) eine Materialstärke von 15% bis 25% des Durchmessers der Wälzkörper (10) aufweist.

4. Axialkäfig nach Anspruch 1, **dadurch gekennzeichnet, dass** das Querschnittsprofil der Ringscheibe (2) als kantenfreies Wellenprofil ausgebildet ist, dessen mittlere Sicke (7) die gleiche axiale Höhe wie die Borde (3, 4) aufweist.

5. Axialkäfig nach Anspruch 3, **dadurch gekennzeichnet, dass** die Zwischenprofilabschnitte (5, 6) und die mittlere Sicke (7) die Form ab- und aufsteigend aneinander gereihter, gleicher Radien oder Sinuskurven aufweisen.

## Claims

1. Axial cage (1) for cylindrical rolling elements, substantially comprising a thin-walled annular disc (2) having a profiled cross-section which is formed by means of an inner radial rim (3) which is formed on the inner edge of the annular disc (2), an outer radial rim (4) which is formed on the outer edge of the annular disc (2) and a central bead (7) which is connected to the radial rims (3, 4) by means of radially inner and outer intermediate profile portions (5, 6), wherein from the bead (7) and the adjacent intermediate profile portions (5, 6), there are recessed a number of rectangular cage pockets (8) which are uniformly spaced apart from each other and between which there are formed an identical number of pocket webs (9) which connect the rims (3, 4) to each other and by means of which the cylindrical rolling elements (10) are retained in the cage pockets (8) with uniform spacing from each other and guided in a peripheral direction, **characterized in that** the annular disc (2) comprises a highly alloyed spring steel which is already through-hardened and tempered before the processing operation and which has a maximum hardness of 450 HV.

2. Axial cage according to Claim 1, **characterized in that** any spring steel can be used as the spring steel for the annular disc (2), for example, a spring steel of the type C 75 SQT.

3. Axial cage according to Claim 1, **characterized in that** the spring steel for the annular disc (2) has a material thickness of from 15% to 25% of the diameter of the rolling element (10).

4. Axial cage according to Claim 1, **characterized in that** the cross-section profile of the annular disc (2) is constructed as an edge-free undulating profile whose central bead (7) has the same axial height as the rims (3, 4).

5. Axial cage according to Claim 3, **characterized in that** the intermediate profile portions (5, 6) and the central bead (7) are in the form of identical radii or sine curves which are arranged one beside the other in a descending and ascending manner.

## Revendications

1. Cage axiale (1) pour corps de roulement cylindriques, se composant essentiellement d'une couronne annulaire (2) à paroi mince avec une section transversale profilée, qui est formée par un rebord radial intérieur (3) façonné sur le bord intérieur de la couronne annulaire (2), un rebord radial extérieur (4) façonné sur le bord extérieur de la couronne annulaire (2) et par une moulure médiane (7) reliée aux rebords radiaux (3, 4) par des parties de profil intermédiaires (5, 6) radialement intérieure et extérieure, dans laquelle un certain nombre d'alvéoles de cage rectangulaires (8) uniformément espacées l'une de l'autre sont prélevées hors de la moulure (8) et des parties de profil intermédiaires adjacentes (5, 6), entre lesquelles sont formées un nombre égal de nervures d'alvéole (9) reliant l'un à l'autre les rebords (3, 4), par lesquelles les corps de roulement cylindriques (10) sont maintenus à des distances uniformes l'un de l'autre dans les alvéoles de cage (8) et sont guidés dans la direction périphérique, **caractérisée en ce que** la couronne annulaire (2) se compose d'un acier à ressort fortement allié d'une dureté maximale de 450 HV, trempé à coeur et revenu déjà avant l'usinage de la section transversale profilée.

2. Cage axiale selon la revendication 1, **caractérisée en ce que** l'on peut utiliser comme acier à ressort pour la couronne annulaire (2) un acier à ressort quelconque, par exemple un acier à ressort de la nuance C 75 SQT.

3. Cage axiale selon la revendication 1, **caractérisée en ce que** l'acier à ressort pour la couronne annulaire (2) présente une épaisseur de matière de 15 % à 25 % du diamètre des corps de roulement (10).

4. Cage axiale selon la revendication 1, **caractérisée en ce que** le profil de section transversale de la couronne annulaire (2) est un profil ondulé sans arêtes, dont la moulure médiane (7) présente la même hauteur axiale que les rebords (3, 4).

5. Cage axiale selon la revendication 3, **caractérisée en ce que** les parties de profil intermédiaires (5, 6) et la moulure médiane (7) présentent la forme de rayons identiques alignés l'un avec l'autre en montée et en descente ou de courbes sinusoïdales.
